# EUROPEAN PATENT SPECIFICATION

(11) **EP 0 904 300 B1**
(45) Date of publication and mention of the grant of the patent: **05.01.2000**
(21) Application number: 97931219.6
(22) Date of filing: 17.06.1997
(51) Int. Cl.: C08C 19/44

(54) **PROTECTED FUNCTIONALIZED TELECHELIC POLYMERS AND PROCESSES FOR MAKING THE SAME**
TELECHELE POLYMERE MIT GESCHÜTZTEN FUNKTIONELLEN GRUPPEN UND VERFAHREN ZUR HERSTELLUNG
POLYMERES TELECHELIQUES, FONCTIONNALISES ET PROTEGES ET LEURS PROCEDES DE FABRICATION

(30) Priority: 18.06.1996 US 19995 P
(43) Date of publication of application: 31.03.1999
(73) Proprietor: FMC CORPORATION, Philadelphia, PA 19118 (US)
(72) Inventor: SCHWINDEMAN, James, A., Lincolnton, NC 28092 (US); QUIRK, Roderick, P., Akron, OH 44313 (US); KAMIENSKI, Conrad William, deceased (US)
(74) Representative: Mouget-Goniot, Claire
(86) International application number: US9710485
(87) International publication number: WO9748731

(56) References cited:
- WO-A-97/16465
- US-A- 5 321 148
- US-A- 5 336 726
- US-A- 5 478 899
- US-A- 5 521 255

## Description

### Field of the Invention

This invention relates generally to telechelic polymers and processes for making the same, and more particularly to telechelic polymers having protected functional groups.

### Background of the Invention

Telechelic polymers have found utility in making adhesives, sealants, coatings, films and fibers. These polymers have typically been prepared from a dilithium initiator. See, for example, U.S. Patent Nos. 5,393,843 and 5,405,911. For example, reaction of two equivalents of an alkyllithium reagent, such as sec-butyllithium, with a compound having at least two independently polymerized vinyl groups, such as isomeric divinylbenzenes or isomeric diisopropenylbenzenes, generates a dilithium initiator. Addition of an anionically polymerizable monomer, such as 1,3-butadiene, isoprene, or styrene, affords a polymer chain, with living anions on each of the two termini. This dianion can then be quenched with various functionalizing agents, to afford a telechelic polymer. However, these functionalization reactions are often inefficient, due to the formation of physical gelation phenomena that produce severe mixing problems (see L. Weber, Makromol. Chem., Macromol. Symp., 3, 317 (1986) and U. S. Patent Nos. 5,393,843 and 5,478,899).

### Summary of the Invention

This invention provides telechelic functional polydiene polymers, polyarylene polymers and polydiene/polyarylene copolymers, their hydrogenated analogues, and processes for preparing the same. In contrast to telechelic polymers of the prior art, the molecular architecture of compounds of the present invention can be precisely controlled. High functionalization of the living polymer dianions can also be achieved, as the functionalizing agents of the current invention do not cause gelation to occur upon addition to a living polymer. Further, the nature of the functional group and its protecting group can be varied, simply by changing the functionalizing agent.

The present invention also provides processes for preparing the polymers of the invention, which can provide efficient functionalization of the living polymer anions.

### Detailed Description of the Invention

The telechelically functional polymers of the present invention can be defined as follows:

(Y)-[C-Z-T- (A-R¹R²R³)ₘ]₂

wherein:
Y represents a core derived by incorporation of at least one molecule or mixtures of molecules having at least two independently polymerized vinyl groups, such as 1,3-divinylbenzene or 1,4-divinylbenzene;
C is a hydrogenated or unsaturated block derived by anionic polymerization of at least one monomer selected from the group consisting of conjugated dienes, alkenylsubstituted aromatics, and mixtures thereof;
Z is a branched or straight chain hydrocarbon connecting group which contains 3-25 carbon atoms;
T is selected from oxygen, sulfur, or nitrogen;
(A-R¹R²R³)ₘ is a protecting group, in which A is an element selected from Group IVa of the Periodic Table of the Elements; and R¹, R², and R³ are independently defined as hydrogen, C1-C25 alkyl, substituted C1-C25 alkyl groups containing lower C1-C10 alkyl, lower alkylthio, and lower dialkylamino groups, C3-C25 aryl or substituted C3-C25 aryl groups containing lower C1-C10 alkyl, lower alkylthio, lower dialkylamino groups, or C3-C12 cycloalkyl and substituted cycloalkyl groups containing 5 to 12 carbon atoms, and m is 1 when T is oxygen or sulfur, and 2 when T is nitrogen.

Conjugated diene and alkenylsubstituted aromatic hydrocarbons to be anionically polymerized are chosen from the group of unsaturated organic compounds that can be polymerized anionically (i.e. in a reaction initiated by an organo-alkali metal). Examples of suitable conjugated diene hydrocarbons include, but are not limited to, 1,3-butadiene, isoprene, 2,3-dimethyl-1,3-butadiene, 1,3-pentadiene, myrcene, 2-methyl-3-ethyl-1,3-butadiene, 2-methyl-3-ethyl-1,3-pentadiene, 1,3-hexadiene, 2-methyl-1,3-hexadiene, 1,3-heptadiene, 3-methyl-1,3-heptadiene, 1,3-octadiene, 3-butyl-1,3-octadiene, 3,4-dimethyl-1,3-hexadiene, 3-n-propyl-1,3-pentadiene, 4,5-diethyl-1,3-octadiene, 2,4-diethyl-1,3-butadiene, 2,3-di-n-propyl-1,3-butadiene, and 2-methyl-3-isopropyl-1,3-butadiene.

Examples of polymerizable alkenylsubstituted aromatic hydrocarbons include, but are not limited to, styrene, alpha-methylstyrene, vinyltoluene, 2-vinylpyridine, 4-vinylpyridine, 1-vinylnaphthalene, 2-vinylnaphthalene, 1-alpha-methylvinylnaphthalene, 2-alpha-methylvinylnaphthalene, 1,2-diphenyl-4-methyl-1-hexene and mixtures of these, as well as alkyl, cycloalkyl, aryl, alkylaryl and arylalkyl derivatives thereof in which the total number of carbon atoms in the combined hydrocarbon constituents is generally not greater than 18. Examples of these latter compounds include 3-methylstyrene, 3,5-diethylstyrene, 4-tertbutylstyrene, 2-ethyl-4-benzylstyrene, 4-phenylstyrene, 4-p-tolylstyrene, 2,4-divinyltoluene and 4,5-dimethyl-1-vinylnaphthalene. U.S. Patent No. 3,377,404 discloses suitable additional alkenylsubstituted aromatic compounds.

The polymers of the invention can be optionally hydrogenated. The protecting groups can also be optionally removed, prior to or following hydrogenation. Removal of the protecting group(s) (deprotection) produces polymers with at least one functional group (e.g. oxygen, sulfur and/or nitrogen) per polymer chain on the ends of the polymer arms. The functional groups can then participate in various copolymerization reactions by reaction of the functional groups on the ends of the polymer arms with selected difunctional or polyfunctional comonomers.

After deprotection, the polymer has the following structure:

(Y)-[C-Z-T(H)ₘ]₂

wherein:
Y represents a core derived by incorporation of at least one molecule or a mixture of molecules having at least two independently polymerized vinyl groups, such as 1,3-divinylbenzene or 1,4-divinylbenzene;
C is a hydrogenated or unsaturated block derived by anionic polymerization of at least one monomer selected from the group consisting of conjugated dienes, alkenylsubstituted aromatics, and mixtures thereof; and
Z, T, and m are defined as above.

In one preferred embodiment of the invention, each C block is hydrogenated 1,3-butadiene having a peak molecular weight from 500 to 50,000, and the 1,2-polymerization of the hydrogenated butadiene is between 40% and 60%. In another embodiment of the invention, each C block is hydrogenated isoprene having a peak molecular weight from 500 to 50,000.

Advantages of the telechelic polymers produced by the present invention include highly efficient functionalization of the living anion sites on the arms of the polymer. In addition, various protected functional groups can be introduced. Further, the polymers of the invention can be less expensive to produce than alternative methods to prepare telechelic polymers.

The present invention also provides processes for producing the polymers described above. The process of the invention includes the following steps:
adding two (2) equivalents of at least one lithium initiator or a mixture of lithium initiators, such as sec-butyllithium, to at least one or a mixture of compounds having at least two independently polymerizable vinyl groups, such as 1,3-divinylbenzene or 1,3-diisopropenylbenzene, to form a dilithium initiator having a central core formed of the compounds(s) having polymerizable vinyl groups;
adding at least one monomer selected from the group consisting of conjugated dienes, alkenylsubstituted aromatics, and mixtures thereof, to grow or polymerize polymer arms having living ends from the central core; and
adding two equivalents of at least one or a mixture of functionalizing agents (electrophiles) having the following structure:

   X-Z-T-(A-R¹R²R³)ₘ
wherein:
X is halogen selected from chloride, bromide and iodide; and
Z, T, A, R¹, R², R³, and ₘ are as defined above,
to form a polymer as described above having protected functional groups at the terminus (or end distal from the core) of the arms. The resultant functionalized polymer can then be recovered using conventional techniques.

The monomers can be polymerized singly, sequentially or as a mixture thereof in an inert solvent, preferably a non-polar solvent, optionally containing an ethereal modifier, at a temperature of about -30°C to about 150°C.

The functionalizing agents, or electrophiles, can be prepared as described, for example, in International Publication WO 97/16465. In addition, the electrophiles can be prepared as described in K. Ueda, A. Hirao, and S. Nakahama, Macromolecules, 23, 939 (1990); U.S. Patent No. 5,496,940; U.S. Patent No. 5,600,021; U.S. Patent No. 5,362,699; A. Alexakis, M. Gardette, and S. Colin, Tetrahedron Letters, 29, 1988, 2951; B. Figadere, X. Franck, and A. Cave, Tetrahedron Letters, 34, 1993, 5893; J. Almena, F. Foubelo, and M. Yus, Tetrahedron, 51, 1995, 11883; D.F. Taber and Y. Wang, J. Org. Chem., 58, 1993, 6470; F.D. Toste and I.W. J. Still, Synlett, 1995, 159; and U.S. Patent No. 5,493,044. The functionalizing step can be conducted at temperatures ranging from about -30°C to about 150°C.

As noted above, if desired, the protecting groups can be removed from the polymers. Deprotection can be performed either prior to or after the optional hydrogenation of the residual unsaturation. For example, to remove tert-alkyl-protected groups, the protected polymer can be mixed with Amberlyst® 15 ion exchange resin and heated at an elevated temperature, for example 150°C, until deprotection is complete. Tert-alkyl-protected groups can also be removed by reaction of the polymer with para-toluensulfonic acid, trifluoroacetic acid, or trimethylsilyliodide. Additional methods of deprotection of the tert-alkyl protecting groups can be found in T.W. Greene and P.G.M. Wuts, Protective Groups in Organic Synthesis, Second Edition, Wiley, New York, 1991, page 41.

*Tert*-butyldimethylsilyl protecting groups can be removed by treatment of the copolymer with acid, such as hydrochloric acid, acetic acid, para-toluensulfonic acid, or Dowex® 50W-X8. Alternatively, a source of fluoride ions, for instance tetra-n-butylammonium fluoride, potassium fluoride and 18-crown-6, or pyridine-hydrofluoric acid complex, can be employed for deprotection of the tert-butyldimethylsilyl protecting groups. Additional methods of deprotection of the tert-butyldimethylsilyl protecting groups can be found in T.W. Greene and P.G.M. Wuts, Protective Groups in Organic Synthesis, Second Edition, Wiley, New York, 1991, pages 80-83.

The progress of the deprotection reactions can be monitored by conventional analytical techniques, such as Thin Layer Chromatography (TLC), Nuclear Magnetic Resonance (NMR) spectroscopy, or InfraRed (IR) spectroscopy.

Examples of methods to hydrogenate the polymers of this invention are described in U.S. Patent Nos. 4,970,254, 5,166,277, 5,393,843 and 5,496,898. The hydrogenation of the polymer is conducted *in situ*, or in a suitable solvent, such as hexane, cyclohexane or heptane. This solution is contacted with hydrogen gas in the presence of a catalyst, such as a nickel catalyst. The hydrogenation is typically performed at temperatures from 25°C to 150°C, with a archetypal hydrogen pressure of 1.0 to 6.9 MPa (15 psig to 1000 psig). The progress of this hydrogenation can be monitored by InfraRed (IR) spectroscopy or Nuclear Magnetic Resonance (NMR) spectroscopy. The hydrogenation reaction can be conducted until at least 90% of the aliphatic unsaturation has been saturated. The hydrogenated polymer is then recovered by conventional procedures, such as removal of the catalyst with aqueous acid wash, followed by solvent removal or precipitation of the polymer.

The polymerization solvent can be an inert solvent such as a hydrocarbon. Solvents useful in practicing this invention include, but are not limited to, inert liquid alkanes, cycloalkanes and aromatic solvents such as alkanes and cycloalkanes containing five to ten carbon atoms, such as pentane, hexane, cyclohexane, methylcyclohexane, heptane, methylcycloheptane, octane, and decane, and aromatic solvents containing six to ten carbon atoms such as toluene, ethylbenzene, p-xylene, m-xylene, o-xylene, n-propylbenzene, isopropylbenzene, and n-butylbenzene.

Polar solvents can also be used, including, but not limited to, diethyl ether, dibutyl ether, tetrahydrofuran, 2-methyltetrahydrofuran, methyl tert-butyl ether, diazabicyclo[2.2.2]octane, triethylamine, tributylamine, N,N,N',N'-tetramethylethylene diamine (TMEDA), and 1,2-dimethoxyethane (glyme). Polar solvents (modifiers) can also be added to the polymerization reaction to alter the microstructure of the resulting polymer or to promote functionalization or randomization. The amount of the polar modifier added depends on the vinyl content desired, the nature of the monomer, the temperature of the polymerization, and the identity of the polar modifier.

Exemplary compounds having at least two independently polymerizable vinyl groups include isomeric (mixtures of *ortho, meta* and *para)* dialkenylaryls and isomeric di- and trivinylaryls, such as 1,2-divinylbenzene, 1,3-divinylbenzene, 1,4-divinylbenzene, 1,2,4-trivinylbenzenes, 1,3-divinylnaphthalenes, 1,8-divinylnaphthalene, 1,2-diisopropenylbenzene, 1,3-diisopropenylbenzene, 1,4-diisopropenylbenzene, 1,3,5-trivinylnaphthalene, and other suitable materials known in the art to be useful for coupling polymers, as well as mixtures thereof. See also U.S. Patent Nos. 3,639,517 and 5,489,649, and R.P. Zelinski et al in J.Polym.Sci., A3, 93, (1965) for these and additional compounds. Mixtures of these compounds can also be used. The process is described, for example, in U.S. Patent No. 4,409,357 and by L.J. Fetters in Macromolecules, 9,732 (1976).

Exemplary lithium initiators include those represented by the formula RLi, wherein R represents an aliphatic, cycloaliphatic, or aromatic radical. Such initiators include, but are not limited to, n-butyllithium, sec-butyllithium, tert-butyllithium, and the like, and mixtures thereof.

This procedure efficiently functionalizes each living anion site of the polymer with a protected functional group. The nature of the protected functional group can be varied by merely changing the identity of the electrophile.

The present invention will be further illustrated by the following non-limiting examples.

### Example 1

A functionalized linear polymer having the formula

(Y)-[C-Z-T-(A-R¹R²R³)ₘ]₂

wherein C is a polybutadiene and Y is a divinylbenzene core is synthesized as follows. Cyclohexane (100 pounds), diethyl ether (6 pounds), and m-diisopropenylbenzene (DIPB, 1564 grams, 97 wt% DIPB, 9.6 moles) are combined with stirring in a sealed, steel reactor vessel under an inert nitrogen atmosphere. Impurities that might interfere with anionic polymerization are removed by titration with a solution of sec-butyllithium in cyclohexane (0.09 g of sec-BuLi/ml). The purified solution is then treated with 2 equivalents of sec-BuLi (23.5 pounds of sec-BuLi solution, 19 moles) for each equivalent of DIPB that is present. The diinitiator is formed in solution by reaction at 50°C for about 30 minutes.

In a separate vessel, cyclohexane (162 pounds), diethyl ether (15 pounds), and polymerization grade 1,3-butadiene (42 pounds) are combined under a nitrogen atmosphere at 20°C. Impurities that might interfere with anionic polymerization are removed by titration with a solution of sec-butyllithium in cyclohexane (0.09 g of sec-BuLi/ml). The purified solution of monomer is transferred to the vessel containing the diinitiator and the polymerization ensues. The polymerization exotherm is controlled by cooling the reactor to keep the temperature of the reaction mixture below 50°C. The polymerization reaction is essentially complete after about 30 minutes.

The solution containing the diinitiated polymer is treated at 50°C with 3-(tert-butyldimethylsilyloxy)-1-chloropropane (35.4 pounds, 77 moles) to functionalize the chain ends as a protected alcohol. The reaction is allowed to proceed for about 3 hours. The product functionalized linear polymer is worked up in the usual fashion.

For deprotection, a sample of the functionalized linear polymer (0.001 moles) is dissolved in tetrahydrofuran (10 ml). Aqueous hydrochloric acid (1 ml, 0.5 N, 2.5 equivalents) is added. The solution is heated to reflux for 12 hours. The deprotected linear polymer is precipitated in methanol. The solvent is evaporated under reduced pressure to give hydroxy-terminated linear polymer. Complete deprotection is determined by ¹H NMR analysis (loss of tert-butyldimethylsilyloxy signals).

### Example 2

A functionalized linear polymer is made in a similar fashion to the polymer in Example 1 except that living anion sites of the linear polymer are functionalized by the addition of 3-(tert-butoxy)-1-chloropropane.

For deprotection, a sample of the functionalized linear polymer (0.001 mole) and Amberlyst 15 ion exchange resin (1.5 g, ground powder, Aldrich) are combined in cyclohexane (10 ml). The mixture is heated to reflux for 6 hours and monitored by thin layer chromatography (TLC). The product solution is filtered to remove the amberlyst resin. The polymer is precipitated in methanol. The solvent is evaporated under reduced pressure to give hydroxy-terminated linear polymer. Complete deprotection is determined by ¹H NMR analysis (loss of tert-butoxy signal).

The foregoing examples are illustrative of the present invention and are not to be construed as limiting thereof.

## Claims

1. A telechelic polymer comprising the structure:
(Y) - [C-Z-T- (A-R¹R²R³)ₘ]₂
wherein:
Y represents a core derived by incorporation of at least one molecule or a mixture of molecules having at least two independently polymerized vinyl groups;
C is a hydrogenated or unsaturated block derived by anionic polymerization of at least one monomer selected from the group consisting of conjugated dienes, alkenylsubstituted aromatics, and mixtures thereof;
Z is a branched or straight chain hydrocarbon connecting group which contains 3-25 carbon atoms;
T is oxygen, sulfur, or nitrogen;
(A-R¹R²R³)ₘ is a protecting group in which A is an element selected from Group IVa of the Periodic Table of the Elements; R¹, R², and R³ are independently defined as hydrogen, C1-C25 alkyl, substituted C1-C25 alkyl groups containing lower C1-C10 alkyl, lower alkylthio, and lower dialkylamino groups, C3-C25 aryl or substituted C3-C25 aryl groups containing lower C1-C10 alkyl, lower alkylthio, lower dialkylamino groups, or C3-C12 cycloalkyl and substituted cycloalkyl groups containing 5 to 12 carbon atoms, and m is 1 when T is oxygen or sulfur, and 2 when T is nitrogen.

2. A telechelic polymer comprising the structure:
(Y) - [C-Z-T(H)ₘ]₂
wherein:
Y represents a core derived by incorporation of at least one molecule or mixture of molecules having at least two independently polymerizable vinyl groups;
C is a hydrogenated or unsaturated block derived by anionic polymerization of a monomer selected from the group consisting of conjugated dienes, alkenylsubstituted aromatics, and mixtures thereof;
Z is a branched or straight chain hydrocarbon connecting group which contains 3-25 carbon atoms;
T is oxygen, sulfur, or nitrogen; and
m is 1 when T is oxygen or sulfur, and 2 when T is nitrogen.

3. The polymer of Claims 1 or 2, wherein each C block is hydrogenated 1,3-butadiene having a peak molecular weight from 500 to 50,000.

4. The polymer of Claims 1 or 2, wherein each C block is hydrogenated isoprene having a peak molecular weight from 500 to 50,000.

5. The polymer of Claims 3 or 4, wherein each C block is at least 90% hydrogenated.

6. The polymer of Claim 3, wherein the 1,2-polymerization of the hydrogenated butadiene is between 40% and 60%.

7. The polymer of Claim 1, wherein Y is derived by incorporation of at least one compound selected from the group consisting of isomeric dialkenylaryls, isomeric di- and trivinylaryls and mixtures thereof.

8. A process for making functionalized polymers, comprising:
adding two equivalents of at least one lithium initiator or a mixture thereof to at least one molecule or a mixture of molecules having at least two independently polymerizable vinyl groups to provide a dilithium initiator having a central core formed of the compound having polymerizable vinyl groups;
adding at least one monomer selected from the group consisting of a conjugated dienes, alkenylsubstituted aromatics, and mixtures thereof, to grow arms having living ends from the central core; and
adding two equivalents of at least one or a mixture thereof of a functionalizing agent having the following structure:
X-Z-T - (A-R¹R²R³)ₘ
wherein:
X is halogen selected from chloride, bromide and iodide;
Z is a branched or straight chain hydrocarbon connecting group which contains 3-25 carbon atoms;
T is oxygen, sulfur, or nitrogen; and
(A-R¹R²R³)ₘ is a protecting group in which A is an element selected from Group IVa of the Periodic Table of the Elements; R¹, R², and R³ are independently defined as hydrogen, C1-C25 alkyl, substituted C1-C25 alkyl groups containing lower C1-C10 alkyl, lower alkylthio, and lower dialkylamino groups, C3-C25 aryl or substituted C3-C25 aryl groups containing lower C1-C10 alkyl, lower alkylthio, lower dialkylamino groups, or C3-C12 cycloalkyl and substituted cycloalkyl groups containing 5 to 12 carbon atoms, and m is 1 when T is oxygen or sulfur, and 2 when T is nitrogen, to form a polymer having functional groups at the terminus of the arms and having the formula
(Y) - [C-Z-T-(A-R¹R²R³)ₘ]₂
wherein:
Y represents a core derived by incorporation of at least one or a mixture of molecules having at least two independently polymerized vinyl groups;
C is a saturated or unsaturated block derived by anionic polymerization of at least one monomer selected from the group consisting of conjugated dienes, alkenylsubstituted aromatics, and mixtures thereof; and
Z, T, A, R¹, R², R³, and m are the same as defined above.

9. The process of Claim 8, further comprising recovering the polymer after the third adding step.

10. The process of Claims 8 or 9, further comprising removing at least one protecting group after forming the polymer to produce a functionalized telechelic polymer with at least one functional group per polymer chain.

11. The process of Claim 10, further comprising after said removing step hydrogenating the telechelic polymer at a temperature between 25 and 150°C to produce a saturated, functionalized telechelic polymer with at least one unprotected functional group per polymer chain.

12. The process of Claim 8, further comprising:
hydrogenating the polymer at a temperature between 25 and 150°C after forming the telechelic polymer; and
removing at least one protecting group to produce a functionalized telechelic polymer with at least one unprotected functional group per polymer chain.

13. The process of Claims 11 or 12, wherein the hydrogenation is continued until at least 90% of the aliphatic unsaturation has been saturated.

14. The process of Claim 13, wherein the hydrogenation is continued until at least 95% of the aliphatic unsaturation has been saturated.

## Patentansprüche

1. Telecheles Polymeres, umfassend die Struktur:
(Y) - [C-Z-T- (A-R¹R²R³)ₘ]₂
worin:
Y für einen Kern steht, der durch Einarbeitung mindestens eines Moleküls oder eines Gemisches von Molekülen mit mindestens zwei unabhängig polymerisierten Vinylgruppen steht,
C für einen hydrierten oder ungesättigten Block steht, der sich von einer anionischen Polymerisation mindestens eines Monomeren, ausgewählt aus der Gruppe, bestehend aus konjugierten Dienen, alkenylsubstituierten Aromaten und Gemischen davon, ableitet,
Z für eine verzweigte oder geradkettige Kohlenwasserstoff-Verbindungsgruppe mit 3 bis 25 Kohlenstoffatomen steht,
T für Sauerstoff, Schwefel oder Stickstoff steht,
(A-R¹R²R³)ₘ eine Schutzgruppe ist, in der A ein Element, ausgewählt aus der Gruppe IVa des Periodensystems der Elemente, ist, R¹, R² und R³ unabhängig voneinander als Wasserstoff, C₁-C₂₅-Alkyl-, substituierte C₁-C₂₅-Alkylgruppen, enthaltend Niedrig-C₁-C₁₀-alkyl-, Niedrigalkylthio- und Niedrigdialkylaminogruppen, C₃-C₂₅-Aryl- oder substituierte C₃-C₂₅-Arylgruppen, enthaltend Niedrig-C₁-C₁₀-alkyl-, Niedrigalkylthio-, Niedrigdialkylaminogruppen, oder C₃-C₁₂-Cycloalkylgruppen und substituierte Cycloalkylgruppen, enthaltend 5 bis 12 Kohlenstoffatome, definiert sind, und m den Wert 1 hat, wenn T für Sauerstoff oder Schwefel steht, und den Wert 2 hat, wenn T für Stickstoff steht.

2. Telecheles Polymeres, umfassend die Struktur
(Y) - [C-Z-Z(H)ₘ]₂
worin
Y für einen Kern steht, der durch Einarbeitung mindestens eines Moleküls oder eines Gemisches von Molekülen mit mindestens zwei unabhängig polymerisierbaren Vinylgruppen steht,
C für einen hydrierten oder ungesättigten Block steht, der sich von einer anionischen Polymerisation eines Monomeren, ausgewählt aus der Gruppe, bestehend aus konjugierten Dienen, alkenylsubstituierten Aromaten und Gemischen davon, ableitet,
Z für eine verzweigte oder geradkettige Kohlenwasserstoff-Verbindungsgruppe mit 3 bis 25 Kohlenstoffatomen steht,
T für Sauerstoff, Schwefel oder Stickstoff steht, und m den Wert 1 hat, wenn T für Sauerstoff oder Schwefel steht, und den Wert 2 hat, wenn T für Stickstoff steht.

3. Polymeres nach Anspruch 1 oder 2, dadurch **gekennzeichnet,** daß jeder C-Block hydriertes 1,3-Butadien mit einem Peak-Molekulargewicht von 500 bis 50.000 ist.

4. Polymeres nach Anspruch 1 oder 2, dadurch **gekennzeichnet,** daß jeder C-Block hydriertes Isopren mit einem Peak-Molekulargewicht von 500 bis 50.000 ist.

5. Polymeres nach Anspruch 3 oder 4, dadurch **gekennzeichnet,** daß jeder C-Block mindestens 90% hydriert ist.

6. Polymeres nach Anspruch 3, dadurch **gekennzeichnet,** daß die 1,2-Polymerisation des hydrierten Butadiens zwischen 40% und 60% beträgt.

7. Polymeres nach Anspruch 1, dadurch **gekennzeichnet,** daß sich Y von einer Einarbeitung mindestens einer Verbindung, ausgewählt aus der Gruppe, bestehend aus isomeren Dialkenylarylen, isomeren Di- und Trivinylarylen und Gemischen davon, ableitet.

8. Verfahren zur Herstellung von funktionalisierten Polymeren, umfassend:
Zugabe von zwei Äquivalenten mindestens eines Lithiuminitiators oder eines Gemisches davon zu mindestens einem Molekül oder einem Gemisch von Molekülen mit mindestens zwei unabhängig polymerisierbaren Vinylgruppen zum Erhalt eines Dilithiuminitiators mit einem Mittelkern, der aus einer Verbindung mit polymerisierbaren Vinylgruppen gebildet ist,
Zugabe mindestens eines Monomeren, ausgewählt aus der Gruppe, bestehend aus konjugierten Dienen, alkenylsubstituierten Aromaten und Gemischen davon, um Arme mit lebenden Enden von dem Mittelkern wachsen zu lassen, und
Zugabe von zwei Äquivalenten mindestens eines Funktionalisierungsmittels oder eines Gemisches davon mit folgender Struktur:
X-Z-T- (A-R¹R²R³)ₘ
worin:
X für Halogen, ausgewählt aus Chlorid, Bromid und Iodid, steht,
Z für eine verzweigte oder geradkettige Kohlenwasserstoffverbindungsgruppe mit 3 bis 25 Kohlenstoffatomen steht,
T für Sauerstoff, Schwefel oder Stickstoff steht und
(A-R¹R²R³)ₘ eine Schutzgruppe ist, worin A ein Element, ausgewählt aus der Gruppe IVa des Periodensystems der Elemente, ist, R¹, R² und R³ unabhängig voneinander als Wasserstoff, C₁-C₂₅-Alkyl-, substituierte C₁-C₂₅-Alkylgruppen, enthaltend Niedrig-C₁-C₁₀-alkyl-, Niedrigalkylthio- und Niedrigdialkylaminogruppen, C₃-C₂₅-Aryl- oder substituierte C₃-C₂₅-Arylgruppen, enthaltend Niedrig-C₁-C₁₀-alkyl-, Niedrigalkylthio-, Niedrigdialkylaminogruppen, oder C₃-C₁₂-Cycloalkylgruppen und substituierte Cycloalkylgruppen, enthaltend 5 bis 12 Kohlenstoffatome, definiert sind, und m den Wert 1 hat, wenn T für Sauerstoff oder Schwefel steht, und den Wert 2 hat, wenn T für Stickstoff steht,
zur Bildung eines Polymeren mit funktionellen Gruppen am Ende der Arme mit der Formel
(Y) - [C-Z-T- (A-R¹R²R³)ₘ]₂
worin:
Y für einen Kern steht, der sich von Einarbeitung mindestens eines Moleküls oder eines Gemisches von Molekülen mit mindestens zwei unabhängig polymerisierten Vinylgruppen ableitet,
C für einen gesättigten oder ungesättigten Block, abgeleitet durch anionische Polymerisation von mindestens einem Monomeren, ausgewählt aus der Gruppe, bestehend aus konjugierten Dienen, alkenylsubstituierten Aromaten und Gemischen davon, steht, und
Z, T, A, R¹, R², R³ und m die obigen Bedeutungen haben.

9. Verfahren nach Anspruch 8, dadurch **gekennzeichnet,** daß das Polymere nach der dritten Zugabestufe gewonnen wird.

10. Verfahren nach Anspruch 8 oder 9, dadurch **gekennzeichnet,** daß mindestens eine Schutzgruppe nach Bildung des Polymeren entfernt wird, um ein funktionalisiertes telecheles Polymeres mit mindestens einer funktionellen Gruppe pro Polymerkette herzustellen.

11. Verfahren nach Anspruch 10, dadurch **gekennzeichnet,** daß nach der Entfernungsstufe das telechele Polymere bei einer Temperatur zwischen 25 und 150°C hydriert wird, um ein gesättigtes, funktionalisiertes telecheles Polymeres mit mindestens einer ungeschützten funktionellen Gruppe pro Polymerkette herzustellen.

12. Verfahren nach Anspruch 8, dadurch **gekennzeichnet**, daß das Polymere bei einer Temperatur zwischen 25 und 150°C nach Bildung des telechelen Polymeren hydriert wird und daß mindestens eine Schutzgruppe entfernt wird, um ein funktionalisiertes telecheles Polymeres mit mindestens einer nichtgeschützten funktionellen Gruppe pro Polymerkette herzustellen.

13. Verfahren nach Anspruch 11 oder 12, dadurch **gekennzeichnet**, daß die Hydrierung weitergeführt wird, bis mindestens 90% der aliphatischen Unsättigung gesättigt worden sind.

14. Verfahren nach Anspruch 13, dadurch **gekennzeichnet**, daß die Hydrierung weitergeführt wird, bis mindestens 95% der aliphatischen Unsättigung gesättigt worden sind.

## Revendications

1. Polymère téléchélique comprenant la structure :
(Y)―[C―Z―T―(A―R¹R²R³)ₘ]₂
dans laquelle :
- Y représente un noyau dérivant de l'incorporation d'au moins une molécule ou d'un mélange de molécules ayant au moins deux groupes vinyle polymérisés indépendamment ;
- C est un bloc hydrogéné ou insaturé dérivant de la polymérisation anionique d'au moins un monomère choisi au sein du groupe comprenant les diènes conjugués, les aromatiques substitués par des groupes alkényle et les mélanges de ceux-ci ;
- Z représente un groupe de liaison chaîne hydrocarbonée ramifiée ou linéaire qui contient 3 à 25 atomes de carbone ;
- T représente l'oxygène, le soufre ou l'azote ;
- (A-R¹R²R³)m est un groupe protecteur dans lequel A est un élément choisi au sein du Groupe IVa du Tableau Périodique des Eléments ; R¹, R² et R³ sont définis indépendamment comme étant l'hydrogène, des groupes alkyle C₁-C₂₅, des groupes alkyle C₁₋₂₅ substitués contenant des groupes alkyle inférieurs C₁-C₁₀, alkylthio inférieurs et dialkylamino inférieurs, des groupes aryle C₃-C₂₅ ou des groupes aryle C₃-C₂₅ substitués contenant des groupes alkyle inférieurs C₁-C₁₀, alkylthio inférieurs, dialkylamino inférieurs ou des groupe cycloalkyle C₃-C₁₂ et des groupes cycloalkyle substitués contenant 5 à 12 atomes de carbone. et m est égal à 1 lorsque T représente l'oxygène ou le soufre et est égal à 2 lorsque T représente l'azote.

2. Polymère téléchélique comprenant la structure :
(Y)―[C―Z―T―(H)ₘ]₂
dans laquelle :
- Y représente un noyau dérivant de l'incorporation d'au moins une molécule ou d'un mélange de molécules ayant au moins deux groupes vinyle indépendamment polymérisables ;
- C est un bloc hydrogéné ou insaturé dérivant de la polymérisation anionique d'au moins un monomère choisi au sein du groupe comprenant les diènes conjugués, les aromatiques substitués par des groupes alkényle et les mélanges de ceux-ci ;
- Z représente un groupe de liaison chaîne hydrocarbonée ramifiée ou linéaire qui contient 3 à 25 atomes de carbone ;
- T représente l'oxygène, le soufre ou l'azote ; et
- m est égal à 1 lorsque T représente l'oxygène ou le soufre et est égal à 2 lorsque T représente l'azote.

3. Polymère selon la revendication 1 ou la revendication 2, dans lequel chaque bloc C est un buta-1,3-diène hydrogéné ayant un pic de poids moléculaire compris entre 500 et 50.000.

4. Polymère selon la revendication 1 ou la revendication 2, dans lequel chaque bloc C est un isoprène hydrogéné ayant un pic de poids moléculaire compris entre 500 et 50.000.

5. Polymère selon la revendication 3 ou la revendication 4, dans lequel chaque bloc C est hydrogéné à au moins 90 %.

6. Polymère selon la revendication 3, dans lequel la polymérisation 1,2 du butadiène hydrogéné est comprise entre 40 % et 60 %.

7. Polymère selon la revendication 1, dans lequel Y est dérivé de l'incorporation d'au moins un composé choisi au sein du groupe comprenant les dialkénylaryles isomères, les di- et trivinylaryles isomères et les mélanges de ceux-ci.

8. Procédé de préparation de polymères fonctionnalisés comprenant :
- l'addition de deux équivalents d'au moins un initiateur lithium ou d'un mélange d'initiateurs lithium à au moins une molécule ou à un mélange de molécules ayant au moins deux groupes vinyle polymérisables indépendamment, pour donner un initiateur dilithium ayant un noyau central formé du composé ayant les groupes vinyle polymérisables ;
- l'addition d'au moins un monomère choisi au sein du groupe comprenant les diènes conjugués, les aromatiques substitués par des groupes alkényle, et les mélanges de ceux-ci, pour développer depuis le noyau central, des bras ayant des extrémités vivantes ; et
- l'addition de deux équivalents d'au moins un agent de fonctionnalisation ou d'un mélange d'agents de fonctionnalisation ayant la structure suivante :
X―Z―T―(A―R¹R²R³)ₘ
dans laquelle :
- X est un halogène choisi entre chlorure, bromure et iodure ;
- Z représente un groupe de liaison chaîne hydrocarbonée ramifiée ou linéaire qui contient 3 à 25 atomes de carbone ;
- T représente l'oxygène, le soufre ou l'azote ; et
- (A-R¹R²R³)ₘ est un groupe protecteur dans lequel A est un élément choisi au sein du Groupe IVa du Tableau Périodique des Eléments ; R¹, R² et R³ sont définis indépendamment comme étant l'hydrogène, des groupes alkyle C₁-C₂₅, des groupes alkyle C₁₋₂₅ substitués contenant des groupes alkyle inférieurs C₁-C₁₀, alkylthio inférieurs et dialkylamino inférieurs, des groupes aryle C₃-C₂₅ ou des groupes aryle C₃-C₂₅ substitués contenant des groupes alkyle inférieurs C₁-C₁₀, alkylthio inférieurs, dialkylamino inférieurs ou des groupe cycloalkyle C₃-C₁₂ et des groupes cycloalkyle substitués contenant 5 à 12 atomes de carbone, et m est égal à 1 lorsque T représente l'oxygène ou le soufre et est égal à 2 lorsque T représente l'azote,
pour former un polymère ayant des groupes fonctionnels à l'extrémité des bras et ayant la formule :
(Y)―[C―Z―T―(A―R¹R²R³)ₘ]₂
dans laquelle :
- Y représente un noyau dérivant de l'incorporation d'au moins une molécule ou d'un mélange de molécules ayant au moins deux groupes vinyle polymérisés indépendamment ;
- C est un bloc saturé ou insaturé dérivant de la polymérisation anionique d'au moins un monomère choisi au sein du groupe comprenant les diènes conjugués, les aromatiques substitués par des groupes alkényle et les mélanges de ceux-ci ; et
- Z, T, A, R¹, R², R³ et m sont tels que définis plus haut.

9. Procédé selon la revendication 8, comprenant aussi la récupération du polymère après la troisième étape d'addition.

10. Procédé selon la revendication 8 ou la revendication 9, comprenant aussi le déplacement d'au moins un groupe protecteur après la formation du polymère pour donner un polymère téléchélique fonctionnalisé ayant au moins un groupe fonctionnel par chaîne polymère.

11. Procédé selon la revendication 10, comprenant aussi, après ladite étape de déplacement, l'hydrogénation du polymère téléchélique à une température comprise entre 25 et 150°C, pour produire un polymère saturé, fonctionnalisé ayant au moins un groupe fonctionnel non protégé par chaîne polymère.

12. Procédé selon la revendication 8, comprenant aussi :
- l'hydrogénation du polymère à une température comprise entre 25 et 150°C après la formation du polymère téléchélique ; et
- le déplacement d'au moins un groupe protecteur pour produire un polymère téléchélique fonctionnalisé ayant au moins un groupe fonctionnel non protégé par chaîne polymère.

13. Procédé selon la revendication 11 ou la revendication 12, dans lequel l'hydrogénation est poursuivie jusqu'à ce que l'insaturation aliphatique soit saturée à au moins 90 %.

14. Procédé selon la revendication 13, dans lequel l'hydrogénation est poursuivie jusqu'à ce que l'insaturation aliphatique soit saturée à au moins 95 %.
